Europäisches Patentamt

European Patent Office

Office européen des brevets

(19)

(11) **EP 0 852 679 B1**

(12) **EUROPÄISCHE PATENTSCHRIFT**

(45) Veröffentlichungstag und Bekanntmachung des Hinweises auf die Patenterteilung:
**29.03.2000   Patentblatt 2000/13**

(51) Int Cl.⁷: **F16H 61/12**
// F16H59/42, F16H59/40, F16H59/70

(21) Anmeldenummer: **96933381.4**

(22) Anmeldetag: **25.09.1996**

(86) Internationale Anmeldenummer:
**PCT/EP96/04180**

(87) Internationale Veröffentlichungsnummer:
**WO 97/13083 (10.04.1997 Gazette 1997/16)**

(54) **SICHERHEITSSYSTEM FÜR EIN AUTOMATGETRIEBE**

SAFETY SYSTEM FOR AN AUTOMATIC GEARBOX

SYSTEME DE SECURITE POUR BOITE DE VITESSES AUTOMATIQUE

(84) Benannte Vertragsstaaten:
**DE FR GB IT**

(30) Priorität: **29.09.1995  DE 19536339**

(43) Veröffentlichungstag der Anmeldung:
**15.07.1998   Patentblatt 1998/29**

(73) Patentinhaber: **ZF FRIEDRICHSHAFEN Aktiengesellschaft**
**88038 Friedrichshafen (DE)**

(72) Erfinder: **SIGG, Peter**
**D-88045 Friedrichshafen (DE)**

(74) Vertreter: **Zietlow, Karl-Peter et al**
**ZF FRIEDRICHSHAFEN AG**
**88038 Friedrichshafen (DE)**

(56) Entgegenhaltungen:
**EP-A- 0 398 057          EP-A- 0 436 977**
**EP-A- 0 651 181          EP-A- 0 719 967**
**US-A- 4 779 490          US-A- 5 182 969**

**Beschreibung**

Die Erfindung betrifft ein Sicherheitssystem für ein Automatgetriebe, bei dem für eine Hoch- oder Rückschaltung ein Fehler der abschaltenden Kupplung oder Bremse erkannt wird, wenn der Betrag der Differenz der zeitlichen Verläufe der Getriebeeingangsdrehzahl und dem Produkt aus Getriebeausgangsdrehzahl mal erstem Übersetzungsverhältnis nicht stetig zunimmt.

Unter dem gattungsgemäßen Begriff Automatgetriebe sind elektrohydraulisch gesteuerte Automatgetriebe zu verstehen, bei denen die Schaltung als Überschneidungsschaltung ausgeführt ist. Bei Überschneidungsschaltungen erfolgt die Schaltung, indem eine erste Kupplung oder Bremse öffnet und eine zweite Kupplung oder Bremse schließt.

Bei Automatgetrieben ist es allgemein üblich, dessen ordnungsgemäße Funktion zu überwachen, um sicherheitskritische Situationen zu vermeiden. Überwacht werden die von den Sensoren bereitgestellten Eingangssignale, die elektromagnetischen Stellglieder, die elektronische Getriebesteuerung und über rückgemeldete Größen die an der Schaltung beteiligten Kupplungen und Bremsen. Von besonderem Interesse ist hierbei, ein mangelhaftes Öffnen der abschaltenden Kupplung oder Bremse rechtzeitig zu erkennen, da dies zum Blockieren des Getriebes und anschließender Zerstörung führen kann. Ein mangelhaftes Öffnen ist somit äußerst sicherheitskritisch. Die EP 0 436 977 A zeigt die Merkmale des Oberbegriffes des Anspruches 1.

Die Erfindung hat somit zur Aufgabe, für ein Automatgetriebe ein Sicherheitssystem bereitzustellen, welches ein mangelhaftes Öffnen der abschaltenden Kupplung oder Bremse erkennt.

Die Aufgabe wird erfindungsgemäß durch die Merkmale des Anspruches 1 gelöst. Die Lösung bietet den Vorteil, daß anhand der Tendenz der beiden Kenngrößen frühzeitig beurteilt werden kann, ob die Schaltung ordnungsgemäß abläuft, und, daß Toleranzen der Drehzahlsensoren nicht unmittelbar als ein Fehler der öffnenden Kupplung oder Bremse beurteilt werden. Im Falle eines Fehlers wird dann die Schaltung abgebrochen und das Automatgetriebe verbleibt im ursprünglichen Gang.

In einer Ausgestaltung wird vorgeschlagen, daß kurzzeitig erhöhter Schlupf an den Antriebsrädern erkannt wird, wenn die Werte der ersten Kenngröße G1 unterhalb der zweiten Kenngröße G2 liegen.

In den Figuren ist ein Ausführungsbeispiel dargestellt.

Es zeigen:

Fig. 1 ein Systemschaubild eines Automatgetriebes;

Fig. 2 Kupplungs-Brems-Logik des Automatgetriebes;

Fig. 3 idealen zeitlichen Verlauf der ersten und zweiten Kenngröße für eine Hochschaltung;

Fig. 4 idealen zeitlichen Verlauf der ersten und zweiten Kenngröße für eine Rückschaltung;

Fig. 5A fehlerhaften zeitlichen Verlauf für eine Hochschaltung, 1. Fall;

Fig. 5B fehlerhaften zeitlichen Verlauf für eine Hochschaltung, 2. Fall und

Fig. 6 Diagramm, Anzahl der erfolgreichen/nicht erfolgreichen Prüfbedingungen.

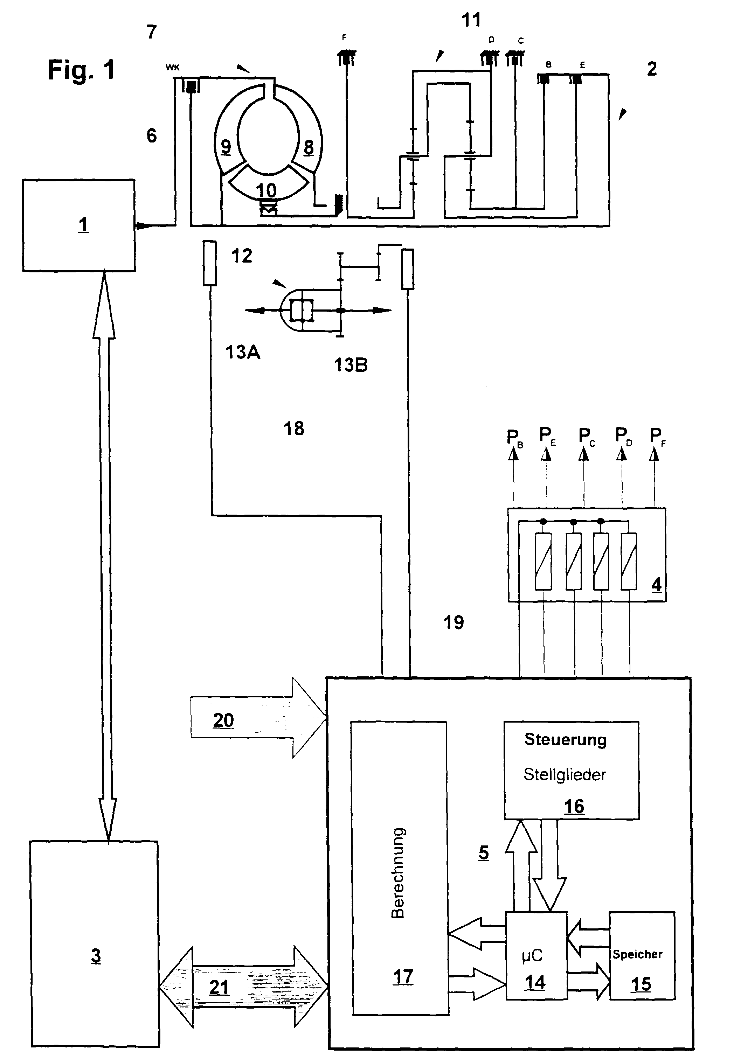

In Fig. 1 ist ein Automatgetriebe 2 dargestellt. Das Automatgetriebe 2 besteht aus einem hydrodynamischen Wandler 7, einem zusammengesetzten Planetenschaltgetriebe 11 mit Differential 12, einem hydraulischen Steuergerät 4 und einem elektronischen Steuergerät 5.

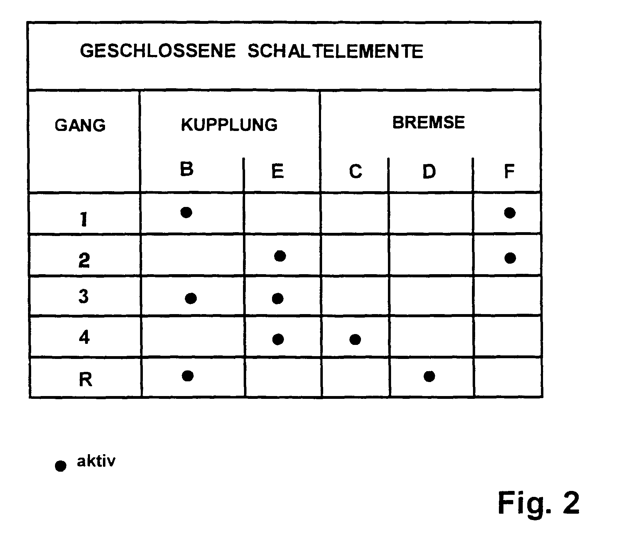

Eine Brennkraftmaschine 1 treibt über die Antriebswelle 6 das Automatgetriebe 2 an. Ein elektronisches Motorsteuergerät 3 steuert oder regelt die Brennkraftmaschine 1. Die Antriebswelle 6 ist drehfest mit dem hydrodynamischen Wandler 7 verbunden und treibt dessen Pumpenrad 8 an. Bekanntermaßen besteht der hydrodynamische Wandler 7 aus dem Pumpenrad 8, einem Turbinenrad 9 und einem Leitrad 10. Parallel zum hydrodynamischen Wandler 7 ist eine Wandlerüberbrückungskupplung ohne Bezugszeichen dargestellt. Bei betätigter Wandlerüberbrückungskupplung dreht sich die Turbinenwelle mit der gleichen Drehzahl wie die Antriebswelle 6. Das zusammengesetzte Planetenschaltgetriebe 11 besteht aus zwei Planetenradpaaren und den Kupplungen bzw. Bremsen B bis F. Die entsprechende Gangzuordnung zur Kupplungs-/Brems-Kombination ist aus Fig. 2 ersichtlich. Der Abtrieb geschieht über das Differential 12 und die beiden Achshalbwellen 13A und 13B. Da der mechanische Teil zum weiteren Verständnis der Erfindung nicht relevant ist, wird auf eine detaillierte Beschreibung verzichtet.

Die Kupplungen und Bremsen B bis F werden von dem elektronischen Steuergerät 5 über das hydraulische Steuergerät 4 gesteuert oder geregelt. Im hydraulischen Steuergerät 4 befinden sich die elektromagnetischen Stellglieder und hydraulischen Nachfolgeschieber. Vom elektronischen Steuergerät 5 sind in stark vereinfachter Form die Funktionsblöcke Micro-Controller 14, Speicher 15, Funktionsblock Berechnung 17 und Funktionsblock Steuerung Stellglieder 16 dargestellt. Der Speicher 15 ist üblicherweise als EPROM oder als gepufferter RAM ausgeführt. Im Speicher 15 sind die getrieberelevanten Daten abgelegt. Der Funktionsblock Steuerung Stellglieder 16 dient der Ansteuerung der elektromagnetischen Stellglieder im hydraulischen Steuergerät 4. Der Funktionsblock Berechnung 17 dient der Berechnung der schaltungsrelevanten Daten. Diese werden aus den Eingangsgrößen 18 bis 21 bestimmt. Eingangsgrößen 20 sind z. B. das Signal eines Wählhebels, die Drehzahl der Brennkraftmaschine, das Signal einer Fahrpedal- oder Drosselklappenstellung, die Temperatur des Hydraulikfluids usw. Das elektronische Motorsteuergerät 3 und das elektronische Steuergerät 5 stehen über eine Datenleitung 21 miteinander in Verbindung. Diese Datenleitung 21 kann als Eindrahtschnittstelle ausgeführt sein, um z. B. einen Motoreingriff durchzuführen. Daneben kann die Datenleitung 21 auch als bidirektionale Datenleitung für ein Bussystem, z. B. CAN-Bus, ausgeführt sein. Zusätzliche Eingangsgrößen für das Steuergerät 5 sind die Getriebeeingangsdrehzahl 18 und die Getriebeausgangsdrehzahl 19.

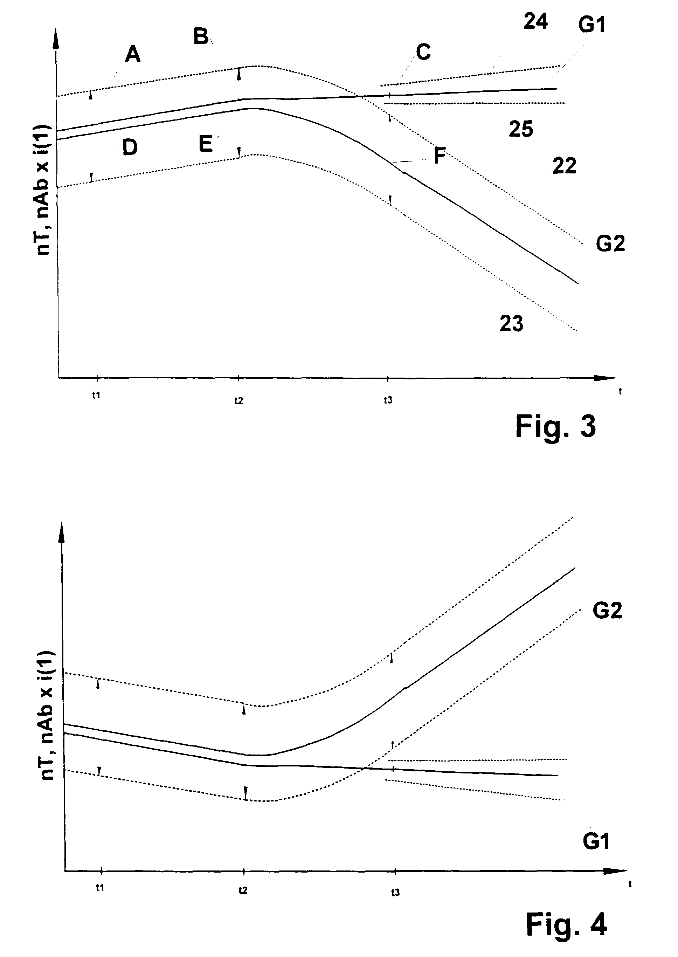

Fig. 3 zeigt einen idealen Verlauf der beiden Kenngrößen G1 und G2 für eine Hochschaltung. Auf der Abszisse ist die Zeit abgetragen, auf der Ordinate sind die Drehzahlwerte der ersten Kenngröße G1 (G1 = nAB x i1) und G2 (G2 = nT) aufgetragen. Hierin bedeuten nAB die Getriebeausgangsdrehzahl und nT die Getriebeeingangsdrehzahl. Für die drei Abfragezeitpunkte t1, t2 und t3 ergibt sich somit für die erste Kenngröße G1 der Kurvenzug A, B und C. Für die zweite Kenngröße G2 ergibt sich der Kurvenzug D, E und F. Die Funktion des Sicherheitssystems ist folgendermaßen: Zum Zeitpunkt Null wird die Schaltung initiiert. Zu einem ersten Zeitpunkt t1 wird der Wert der ersten Kenngröße G1, Punkt A, berechnet und der Wert der zweiten Kenngröße G2, Punkt D, erfaßt. Zu einem zweiten Zeitpunkt t2 wird die erste Kenngröße G1 erneut berechnet, Punkt B, und der Wert der zweiten Kenngröße G2 erfaßt, Punkt E. Durch Differenzbildung wird der zeitliche Verlauf der ersten und zweiten Kenngröße ermittelt, es gelten somit:

$$dG1 = G1(t2) - G1(t1)$$

$$dG2 = G2(t2) - G2(t1)$$

Zu einem dritten Zeitpunkt t3 wiederholt sich das Verfahren, dieser ergibt die Punkte C und F. Zwischen dem Zeitpunkt t2 und t3 hat die zweite Kupplung die Last von der ersten Kupplung übernommen. Dadurch ändert sich der zeitliche Verlauf der zweiten Kenngröße G2. Die berechneten Werte der ersten Kenngröße G1 bleiben nahezu konstant, da die Getriebeausgangsdrehzahl nahezu konstant bleibt. Der Betrag der Differenzwerte der ersten und zweiten Kenngröße werden in Beziehung zueinander gesetzt. Für den Abfragezeitpunkt t3 entspricht dies dem Abstand von Punkt C zu Punkt F. Bei einem ordnungsgemäßen Verlauf der Schaltung vergrößert sich der Betrag.
In Fig. 3 zusätzlich darstellt sind zwei Hysteresebänder, welche den idealen Verlauf der ersten und zweiten Kenngröße umgeben. Für die erste Kenngröße G1 ist für das Hystereseband die obere Grenze mit dem Bezugszeichen 24 und die untere Grenze mit dem Bezugszeichen 25 markiert. Für die zweite Kenngröße G2 zeigt das Bezugszeichen 22 die obere Grenze und das Bezugszeichen 23 entsprechend die untere Grenze. Hierdurch wird der Vorteil erzielt, daß Meßfehler oder Störungen auf den Drehzahlsignalen nicht das Erkennen eines Fehlers verhindern. Die Bandbreite der Hysterese wird aus Versuchen gewonnen und beträgt z. B. +/-100 Umdrehungen.

Fig. 4 zeigt einen idealen Verlauf der beiden Kenngrößen G1 und G2 für eine Rückschaltung. Auf der Abszisse ist die Zeit abgetragen, auf der Ordinate sind die Drehzahlwerte der ersten Kenngröße G1 (G1 = nABx i1) und G2 (G2 = nT) aufgetragen. Für die Berechnung der beiden Kenngrößen und des Verfahrens gilt das bei Fig. 3 Gesagte.

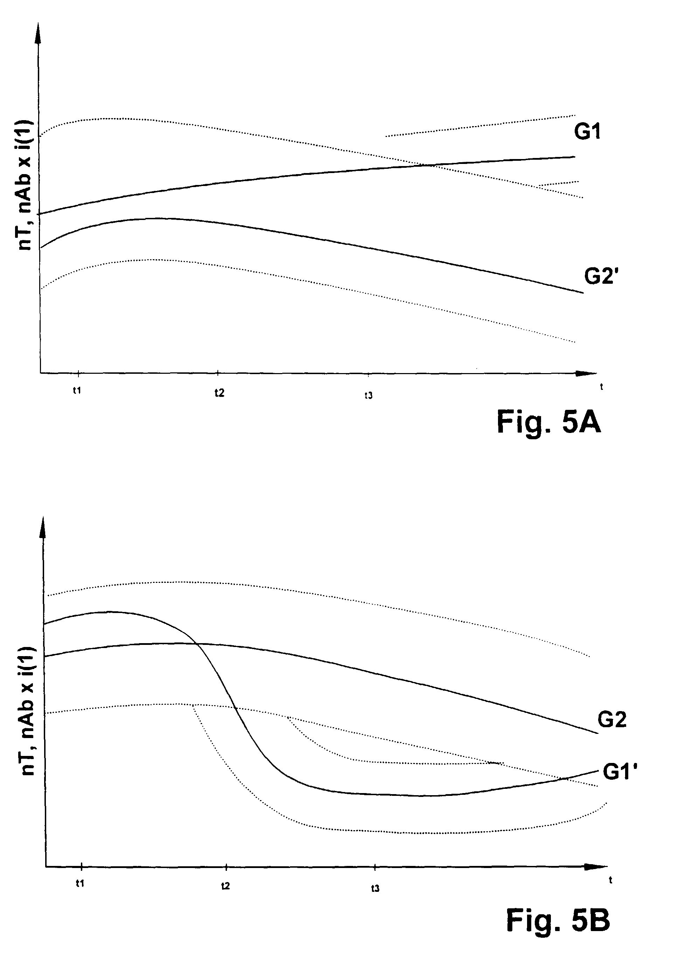

Fig. 5A zeigt den Verlauf der beiden Kenngrößen G1 und G2 für eine fehlerhafte Hochschaltung. In Unterscheidung zu einer ordnungsgemäßen Hochschaltung ist hier die zweite Kenngröße G2 mit G2' bezeichnet. Die Hüllkurven der beiden Kenngrößen bleiben auch nach der Lastübernahme überlappt. Eine erste Fehlerursache kann darin liegen, daß die abschaltende Kupplung oder Bremse nicht ordnungsgemäß öffnet. Eine zweite Fehlerursache liegt darin, wenn in der zuschaltenden Kupplung ein zu geringes Druckniveau vorhanden ist. Dadurch kann die zuschaltende Kupplung die Last von der abschaltenden Kupplung nicht übernehmen. Beide Fehlerursachen bewirken einen flacheren Verlauf der zweiten Kenngröße G2' gegenüber dem Verlauf der zweiten Kenngröße G2 bei einer ordnungsgemäßen Schaltung.

Fig. 5B zeigt eine weitere fehlerbehaftete Hochschaltung. Der Fehler zeigt sich darin, daß die Werte der ersten Kenngröße G1, hier als G1' bezeichnet, unterhalb der Werte der zweiten Kenngröße G2 liegen. Dies ist dann der Fall, wenn an den Antriebsrädern des Fahrzeugs stark schwankende Reibwertänderungen, z. B. Schlupf, auftritt.

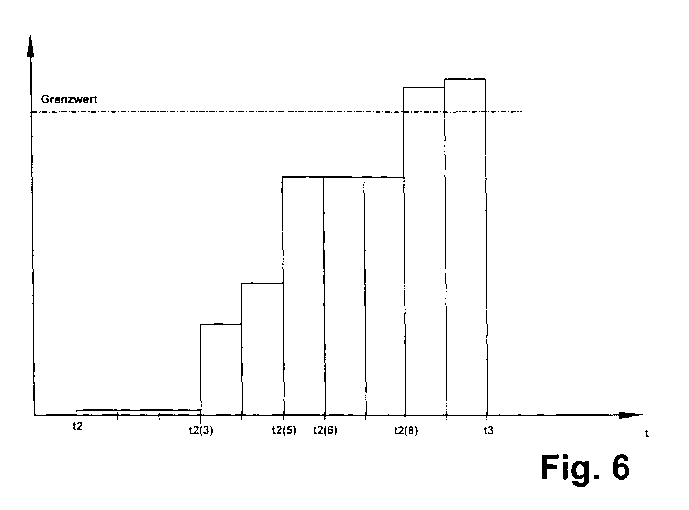

Fig. 6 zeigt eine weitere Ausgestaltung. Hierbei wird davon ausgegangen, daß im Zeitraum t2 bis t3 die Getriebeausgangs- und die Getriebeeingangsdrehzahl mit einem höheren Abfragetakt erfaßt werden. Infolgedessen werden die beiden Kenngrößen G1 und G2 auch mit einem höheren Takt berechnet. Während des Zeitraums t2 bis t3 wird die Anzahl der erfolgreichen Prüfbedingungen und der nicht erfolgreichen Prüfbedingungen gezählt und summiert. Eine erfolgreiche Prüfbedingung ist dann gegeben, wenn die Hüllkurven der ersten und zweiten Kenngrößen sich nicht überlappen. In Fig. 6 ist im Zeitraum t2 bis t2 (3) die Prüfbedingung negativ und im Zeitraum t2 (3) bis t2 (5) sind die Prüfbedingungen positiv. Im Zeitraum t2 (5) bis t2 (8) wiederum ist die Prüfbedingung nicht erfüllt. Im Zeitpunkt t2 (8) übersteigt die Summe einen Grenzwert. Ab diesem Grenzwert wird die Schaltung als ordnungsgemäß definiert.

Bezugszeichen

| | |
|---|---|
| 1 | Brennkraftmaschine |
| 2 | Automatgetriebe |
| 3 | elektronisches Motorsteuergerät |
| 4 | hydraulisches Steuergerät |
| 5 | elektronisches Steuergerät |
| 6 | Antriebswelle |
| 7 | hydrodynamischer Wandler |
| 8 | Pumpenrad |
| 9 | Turbinenrad |
| 10 | Leitrad |
| 11 | zusammengesetztes Planetenschaltgetriebe |
| 12 | Differential |
| 13A | Achshalbwellen |
| 13B | Achshalbwellen |
| 14 | Micro-Controller |
| 15 | Speicher |
| 16 | Funktionsblock Steuerung Stellglieder |
| 17 | Funktionsblock Berechnung |
| 18 | Getriebeeingangsdrehzahl |
| 19 | Getriebeausgangsdrehzahl |
| 20 | Eingangsgrößen |
| 21 | Datenleitung |
| 22 | Hystereseband |
| 23 | Hystereseband |
| 24 | Hystereseband |
| 25 | Hystereseband |
| G1 | erste Kenngröße |
| G2 | zweite Kenngröße |
| G2' | zweite Kenngröße, fehlerbehaftet |
| G2" | zweite Kenngröße, fehlerbehaftet |

**Patentansprüche**

1. Sicherheitssystem für ein vorzugsweise von einer Brennkraftmaschine angetriebenes Automatgetriebe (2), das Automatgetriebe (2) umfaßt Kupplungen und Bremsen (B, F), ein hydraulisches Steuergerät (4) und ein elektronisches Steuergerät (5), das elektronische Steuergerät (5) steuert oder regelt in Abhängigkeit von Eingangsgrößen (18 bis 21) über das hydraulische Steuergerät (4) die Kupplungen und Bremsen (B, F), wobei über eine Kupplungs-/Brems-Kombination ein entsprechender Gang bzw. eine Übersetzung (i) definiert ist, als Eingangsgrößen dem elektronischen Steuergerät (5) wenigstens die Getriebeeingangsdrehzahl (nT(t)) und die Getriebeausgangsdrehzahl (nAB(t)) zur Verfügung stehen, eine Hoch- oder Rückschaltung von einer ersten Übersetzung (i1) zu einer zweiten Übersetzung (i2) ausgeführt wird, indem eine erste Kupplung oder Bremse öffnet und eine zweite Kupplung oder Bremse schließt, das elektronische Steuergerät (5) mit Beginn der Schaltung zyklisch aus der gemessenen Getriebeausgangsdrehzahl (nAB(t)) als erste Kenngröße (G1) das Produkt aus Getriebeausgangsdrehzahl mal erster Übersetzung berechnet (G1 = nAB x i1) und als zweite Kenngröße (G2) die Getriebeeingangsdrehzahl mißt, dadurch **gekennzeichnet**, daß für die erste und zweite Kenngröße (G1, G2) aus zwei aufeinanderfolgenden Werten der zeitliche Verlauf durch Differenzbildung ermittelt (dG1 = G1(t2) - G1(t1) und dG2 = G2(t2) - G2(t1)) wird, der zeitliche Verlauf der ersten und zweiten Kenngröße (G1, G2) jeweils von einer Hüllkurve umgeben ist und das elektronische Steuergerät (5) einen Fehler der öffnenden Kupplung oder Bremse erkennt, wenn die Hüllkurven nach der Lastübernahme sich überlappen, so daß Werte der beiden Kenngrößen (G1, G2) innerhalb der Hüllkurven den fehlerhaften Bereich und Werte außerhalb der Hüllkurven den fehlerfreien Bereich darstellen.

2. Sicherheitssystem nach Anspruch 1, dadurch **gekennzeichnet**, daß die erste und zweite Kenngröße (G1, G2) jeweils von einer Hüllkurve umgeben sind und kurzzeitig erhöhter Schlupf an den Antriebsrädern erkannt wird, wenn die Werte der ersten Kenngröße (G1) kleiner sind als die Werte der zweiten Kenngröße (G2).

3. Sicherheitssystem nach den Ansprüchen 1, oder 2, dadurch **gekennzeichnet,** daß nach der Lastübernahme für einen vorbestimmten Zeitraum (t2 bis t3) mit höherem Abfragetakt die Getriebeeingangsdrehzl (nT(t)) und die Getriebeausgangsdrehzahl (nAB(t)) gemessen, hieraus die erste und zweite Kenngröße (G1, G2) ermittelt werden und die Anzahl der erfolgreichen bzw. nicht erfolgreichen Prüfbedingung gezählt und summiert und ein Fehler erkannt wird, wenn die Summe einen vorgebbaren Grenzwert nicht überschreitet, wobei die erfolgreiche Prüfbedingung dann vorliegt, wenn nach der Lastübernahme die beiden Hüllkurven sich nicht überlappen bzw. eine nicht erfolgreiche Prüfbedingung dann vorliegt, wenn die beiden Hüllkurven sich überlappen.

**Claims**

1. Safety system for an automatic transmission (2), which is preferably driven by an internal combustion engine and comprises clutches and brakes (B, F), a hydraulic controller (4) and an electronic controller (5), which in dependence upon input variables (18 to 21) controls or regulates the clutches and brakes (B, F) via the hydraulic controller (4), wherein by means of a clutch/brake combination a corresponding gear speed and/or a transmission ratio (i) is defined, as input variables at least the transmission input speed (nT(t)) and the transmission output speed (nAB(t)) are available to the electronic controller (5), an upshift or downshift from a first transmission ratio (i1) to a second transmission ratio (i2) is effected in that a first clutch or brake opens and a second clutch or brake closes, the electronic controller (5) at the start of the shift cyclically calculates from the measured transmission output speed (nAB (t)) as a first characteristic quantity (G1) the product of transmission output speed times first transmission ratio (G1 - nAB x i1) and measures as a second characteristic quantity (G2) the transmission input speed, characterized in that for the first and second characteristic quantity (G1, G2) from two successive values the time characteristic is determined by subtraction (dG1 = G1(t2) - G1(t1) and dG2 = G2 (t2) - G2(t1), the time characteristic of the first and second characteristic quantity (G1, G2) is surrounded in each case by an envelope curve and the electronic controller (5) identifies a fault of the opening clutch or brake when the envelope curves after the load transfer overlap, so that values of the two characteristic quantities (G1, G2) within the envelope curves represent the defective region and values outside of the envelope curves represent the defect-free region.

2. Safety system according to claim 1, characterized in that the first and second characteristic quantity (G1, G2) are surrounded in each case by an envelope curve and temporarily increased slip at the drive wheels is identified when the values of the first characteristic quantity (G1) are lower than the values of the second characteristic quantity (G2) .

3. Safety system according to claims 1, or 2, characterized in that after the load transfer for a predetermined period of time (t2 to t3) the transmission input speed (nT(t)) and the transmission output speed (nAB(t)) are measured with a higher scan pulse, on said basis the first and second characteristic quantity (G1, G2) are determined and the number of successful and/or unsuccessful test condition is counted and summed and a fault is identified when the sum does not exceed a preselectable limit value, wherein the successful test condition exists when after the load transfer the two envelope curves do not overlap, and an unsuccessful test condition exists when the two envelope curves overlap.

**Revendications**

1. Système de sécurité pour une boîte automatique (2), de préférence pour un véhicule entraîné par un moteur thermique, cette boîte automatique (2) comportant des embrayages et des freins (B, F), un appareil de commande hydraulique (4) et un appareil de commande électronique (5), l'appareil de commande électronique (5) commandant ou régulant les embrayages et les freins (B, F) par l'intermédiaire de l'appareil de commande hydraulique (4) en fonction de grandeurs d'entrée (18 à 21), dans lequel on définit une vitesse donnée, respectivement une démultiplication (i) par une combinaison des embrayage et des freins, une valeur d'entrée de l'appareil de commande électronique (5) comprenant au moins la vitesse angulaire de l'arbre d'entrée de la boîte (nT (t)) et la vitesse angulaire de l'arbre de sortie de la boîte (nAB (t)), une augmentation de la vitesse ou un rétrogradage de la vitesse d'une première démultiplication (i1) vers une deuxième démultiplication (i2) étant effectué, de façon qu'un premier embrayage ou frein s'ouvre et qu'un deuxième embrayage ou frein se ferme, l'appareil de commande électronique (5) mesurant, comme première grandeur caractéristique (G1), le produit de la vitesse angulaire de l'arbre de sortie de la boîte et de la première démultiplication (G1 = nAB x i1) et comme deuxième grandeur caractéristique (G2), la vitesse angulaire de l'arbre d'entrée, au début du changement de vitesse, de façon cyclique à partir de la vitesse angulaire mesurée de l'arbre de sortie de la boîte (nAB (t)), **caractérisé en ce que** l'on détermine la première et la deuxième grandeur caractéristique (G1, G2) à partir de deux valeurs successives de la dérivée par rapport au temps en faisant la différence (dG1 = G1 (t2) - G1 (t1) et dG2 = G2 (t2) - G2 (t1)) de la dérivée par rapport au temps de la première et de la deuxième grandeur caractéristique (G1, G2), respectivement entourées d'une courbe enveloppe, et en ce que l'appareil de commande électronique (5) reconnaît une erreur de l'embrayage ou du frein ouvert, lorsque les courbes enveloppes se superposent après la reprise de la charge, de sorte que des valeurs des deux grandeurs caractéristiques (G1, G2), qui représentent le secteur des erreurs, se trouvent à l'intérieur de la courbe enveloppe et que des valeurs qui représentent le secteur sans erreur se trouvent à l'extérieur de la courbe enveloppe.

2. Système de sécurité selon la revendication 1, **caractérisé en ce que** les première et deuxième grandeurs caractéristiques (G1, G2) sont respectivement entourées d'une courbe enveloppe, et en ce que le glissement accru des roues motrices est identifié lorsque les valeurs de la première grandeur caractéristique (G1) sont inférieures aux valeurs de la deuxième grandeur caractéristique (G2).

3. Système de sécurité selon la revendication 1 ou 2, **caractérisé en ce que**, après la reprise de la charge, on mesure, pendant un temps prédéterminé, (t2 à t3), à fréquence d'échantillonnage élevée, la vitesse angulaire de l'arbre d'entrée de la boîte (nT (t)) et la vitesse angulaire de l'arbre de sortie de la boîte (nAB (t)), en ce que l'on détermine ainsi les première et deuxième grandeurs caractéristiques (G1, G2) et on compte le nombre de tests réussis, respectivement non réussis, que l'on additionne pour déterminer une erreur lorsque la somme n'atteint pas une valeur prédéterminée, dans lequel le test est considéré comme réussi lorsque, après la reprise de la charge, les deux courbes enveloppes ne se superposent pas, le test étant considéré comme non réussi lorsque les deux courbes enveloppes se superposent.

Fig. 1

EP 0 852 679 B1

| GESCHLOSSENE SCHALTELEMENTE | | | | | |
|---|---|---|---|---|---|
| GANG | KUPPLUNG | | BREMSE | | |
| | B | E | C | D | F |
| 1 | ● | | | | ● |
| 2 | | ● | | | ● |
| 3 | ● | ● | | | |
| 4 | | ● | ● | | |
| R | ● | | | ● | |

● aktiv

**Fig. 2**

8

Fig. 3

Fig. 4

Fig. 5A

Fig. 5B

Grenzwert

t2    t2(3)    t2(5)  t2(6)    t2(8)    t3    t

Fig. 6